# DEMANDE DE BREVET EUROPEEN

(11) **EP 4 389 247 A1**
(43) Date de publication de la demande: **26.06.2024**
(21) Numéro de dépôt: 23216909.4
(22) Date de dépôt: 14.12.2023
(51) Int. Cl.: A63F 13/24, A63F 13/26

(54) **MANETTE DE JEU**

(30) Priorité: 16.12.2022 FR 2213694
(71) Demandeur: LEXIP, 73000 Barberaz (FR)
(72) Inventeur: LOI, Hugo, 73000 BARBERAZ (FR); GIORGIS, Léo, 73000 BARBERAZ (FR); CHATAIGNIER, Geoffroy, 73000 BARBERAZ (FR); CHATAIGNIER, Lionel, 73000 BARBERAZ (FR)
(74) Mandataire: Novaimo

(57) **Abrégé**

Manette de jeu (1) comprenant au moins un bouton (2, 3, 4, 5) équipé d'une source de lumière (6) et d'un filtre optique (7) pourvu d'une face apparente (8) pour un utilisateur de la manette, le filtre optique étant destiné à filtrer des rayons lumineux issus de la source de lumière, le filtre optique étant configuré pour afficher sur sa face apparente un premier symbole et un deuxième symbole différent du premier symbole, le premier symbole étant affiché lorsque ladite source de lumière est allumée.

## Description

### Domaine Technique de l'invention

L'invention concerne une manette de jeu.

### Etat de la technique antérieure

Les manettes de jeu permettent de jouer à des jeux vidéo exécutés par une machine de traitement d'informations telle qu'un ordinateur, une console de jeu, une tablette ou encore un Smartphone. Les différents fabricants de machines de traitement d'informations ont chacun adopté des standards différents pour définir des manettes de jeu compatibles. Par conséquent, la multiplication des machines de traitement d'informations a conduit également à une multiplication des manettes de jeu. On observe ainsi une profusion d'équipements électroniques qui servent chacun relativement peu souvent.

Afin de limiter cette profusion, il a été proposé des manettes de jeu dite "universelles", aptes à modifier les signaux qu'elle émet de manière à être compatibles avec différentes machines de traitement d'informations. La publication WO2016170512A1 divulgue une telle manette de jeu. Toutefois, ces manettes de jeu ne sont pas encore satisfaisantes. Leur aspect universel les rend finalement peut conviviales et peu pratiques à utiliser.

En outre, les manettes de jeu doivent être simples à fabriquer et bon marché afin de rester accessibles à tous.

### Présentation de l'invention

Le but de l'invention est de fournir une manette de jeu remédiant aux inconvénients ci-dessus et améliorant les manettes de jeu connues de l'art antérieur.

Plus précisément, un premier objet de l'invention est de proposer une manette de jeu universelle, bon marché et conviviale à utiliser quelle que soit la machine de traitement d'informations à laquelle elle est connectée.

### Résumé de l'invention

L'invention se rapporte à une manette de jeu comprenant au moins un bouton équipé d'une source de lumière et d'un filtre optique pourvu d'une face apparente pour un utilisateur de la manette, le filtre optique étant destiné à filtrer des rayons lumineux issus de la source de lumière, le filtre optique étant configuré pour afficher sur sa face apparente un premier symbole et un deuxième symbole différent du premier symbole, le premier symbole étant affiché lorsque ladite source de lumière est allumée.

Le filtre optique peut être configuré pour afficher le deuxième symbole lorsque ladite source de lumière est éteinte.

La face apparente du filtre optique peut comprendre un dessin du deuxième symbole, et le filtre optique peut comprendre des ouvertures transparentes agencées selon le premier symbole.

Le deuxième symbole peut être formé par un ensemble de segments, et:
- tous les segments du deuxième symbole peuvent comprendre des ouvertures transparentes, ou
- toutes les ouvertures transparentes du filtre optique peuvent être agencées dans des segments du deuxième symbole.

La source de lumière peut être configurée pour émettre de la lumière d'une première couleur et pour émettre de la lumière d'une deuxième couleur différente de la première couleur, le filtre optique comprenant une première zone apte à laisser passer des rayons lumineux de la première couleur et de la deuxième couleur, notamment la première zone étant transparente, le filtre optique comprenant une deuxième zone apte à bloquer les rayons lumineux de la première couleur et à laisser passer les rayons lumineux de la deuxième couleur.

La première couleur peut être une couleur jaune et la deuxième zone du filtre peut être de couleur bleue. Alternativement, la première couleur peut être une couleur verte et la deuxième zone du filtre peut être de couleur magenta. Alternativement, la première couleur peut être une couleur rouge et la deuxième zone du filtre peut être de couleur cyan.

Le filtre optique peut comprendre une troisième zone apte à bloquer les rayons lumineux de la deuxième couleur et à laisser passer les rayons lumineux de la première couleur.

Le premier symbole peut comprendre au moins une portion en commun avec le deuxième symbole.

Le premier symbole peut être choisi parmi un A, un B, un X, un Y, un carré, un triangle, un rond ou une croix, et/ou le deuxième symbole peut être choisi parmi un A, un B, un X, un Y, un carré, un triangle, un rond ou une croix.

L'au moins un bouton peut comprendre un premier bouton et un deuxième bouton, le premier symbole du premier bouton étant identique au deuxième symbole du deuxième bouton et/ou le deuxième symbole du premier bouton étant identique au premier symbole du deuxième bouton. La manette de jeu peut être configurée pour transmettre des instructions de commande à au moins deux machines de traitement d'informations différentes, la manette de jeu comprenant en outre des moyens de sélection d'une machine de traitement d'informations, et des moyens de contrôle automatique de l'allumage de la source de lumière de l'au moins un bouton en fonction d'une machine de traitement d'informations sélectionnée.

### Présentation des figures

Ces objets, caractéristiques et avantages de la présente invention seront exposés en détail dans la description suivante de deux modes de réalisation particuliers faits à titre non-limitatif en relation avec les figures jointes parmi lesquelles :
La figure 1 est une vue schématique en perspective d'une manette de jeu selon un mode de réalisation de l'invention.
La figure 2 est une vue schématique en coupe d'un bouton de la manette de jeu
La figure 3 est une vue schématique de dessus d'une première configuration d'un ensemble de quatre boutons de la manette de jeu.
La figure 4 est une vue schématique de dessus d'une deuxième configuration de l'ensemble de quatre boutons de la manette de jeu.
La figure 5 est une vue schématique d'un ensemble de quatre boutons de la manette de jeu selon une première variante de réalisation de l'invention, une source de lumière intégrée à chacun des boutons étant éteinte.
La figure 6 est une vue schématique de l'ensemble de quatre boutons de

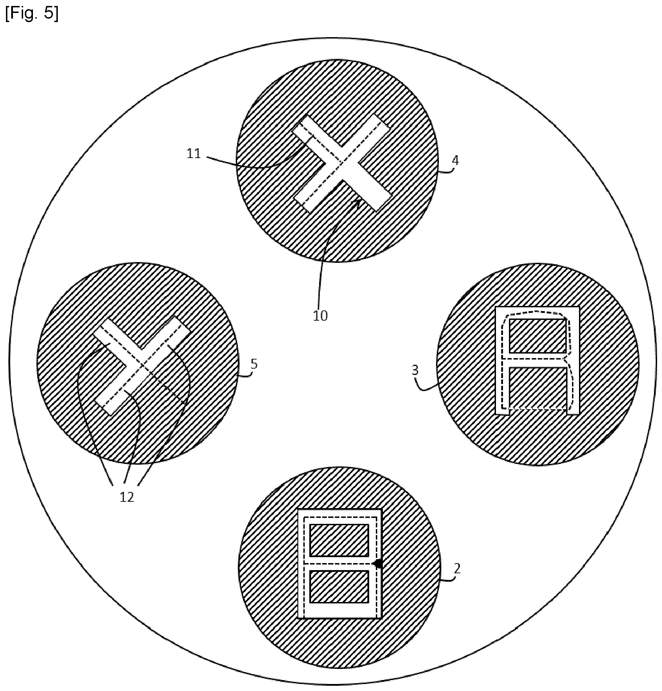

la figure 5, les sources de lumière intégrées à chacun des boutons étant allumées.

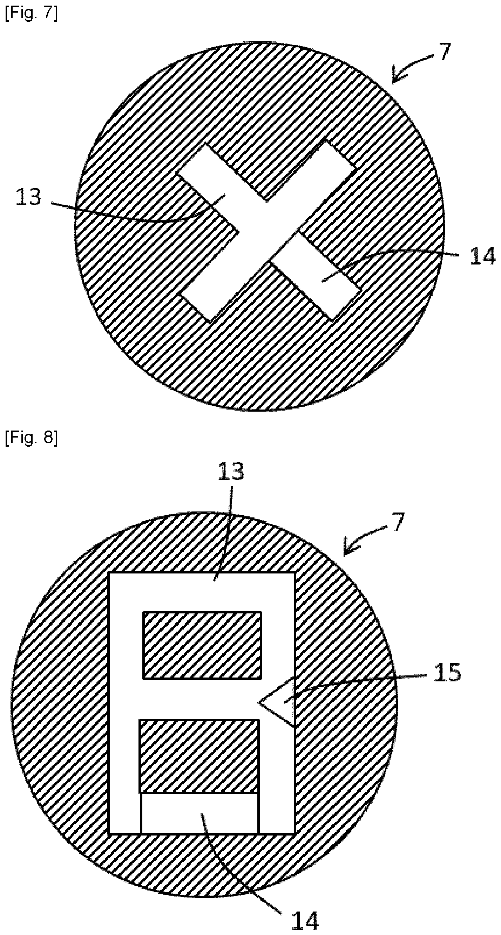

La figure 7 est une vue schématique de dessus d'un filtre optique d'un bouton de la manette de jeu selon une deuxième variante de réalisation de l'invention, le filtre optique étant destiné à afficher un X ou un Y.
La figure 8 est une vue schématique de dessus d'un filtre optique d'un bouton de la manette de jeu selon la deuxième variante de réalisation de l'invention, le filtre optique étant destiné à afficher un A ou un B.

### Description détaillée

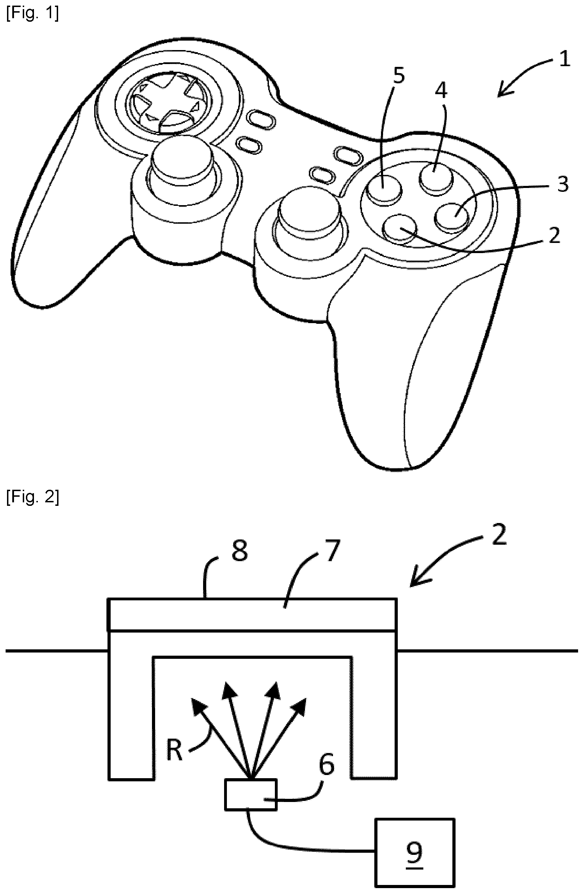

La figure 1 illustre schématiquement une manette de jeu 1 selon un mode de réalisation de l'invention. La manette de jeu 1 est un moyen de contrôle manuel configuré pour transmettre des ordres de commande à une machine de traitement d'informations telle qu'un ordinateur, une console de jeux, une tablette ou encore un Smartphone. A cet effet, la manette de jeu comprend un ensemble de moyens d'interaction tels que des boutons, des gâchettes ou encore des joysticks. Selon le mode de réalisation illustré sur la figure 1, la manette de jeu 1 comprend quatre boutons 2, 3, 4, 5 agencés aux quatre coins d'un carré et destinés à être actionnés avec le pouce de la main droite. En variante, le nombre de boutons et leur agencement sur la manette de jeu pourraient être différents. Chaque bouton 2, 3, 4, 5 est mobile entre une position d'attente et une position enfoncée. Il peut comprendre des moyens de rappels configurés pour maintenir le bouton en position d'attente, et des moyens de détection de la position enfoncée, notamment des moyens de détection d'un contact électrique. La manette de jeu 1 est configurée pour transmettre des instructions de commande, de manière filaire ou sans fil, à une machine de traitement d'informations consécutivement à un appui sur chacun de ses boutons 2, 3, 4, 5.

En outre, la manette de jeu 1 est une manette de jeu dite "universelle" ou polyvalente. C'est-à-dire qu'elle est configurée pour transmettre des instructions de commande à au moins deux machines de traitement d'informations différentes. Autrement dit, elle est compatible avec au moins deux machines de traitement d'informations différentes. Ces deux machines de traitement d'informations différentes peuvent posséder chacune un standard différent concernant la forme des signaux numériques ou analogiques qu'elles perçoivent. Par exemple, la manette de jeu 1 peut être configurée pour fonctionner avec au moins deux machines de traitement d'informations parmi une console de jeux Nintendo Switch^{®}, une console jeux Microsoft Xbox^{®}, une console de jeux Sony Playstation^{®}, un ordinateur équipé d'un système d'exploitation Microsoft Windows^{®} ou encore un téléphone portable Apple^{®}. En outre, la manette de jeu 1 comprend aussi des moyens de sélection d'une machine de traitement d'informations avec laquelle elle est destinée à coopérer. Ces moyens de sélection peuvent être des moyens automatiques. Dans ce cas, la manette de jeu 1 est apte à détecter et à identifier de manière autonome la machine de traitement d'informations avec laquelle elle est connectée. En variante, ces moyens de sélection peuvent aussi être des moyens manuels. Dans ce cas, la manette de jeu comprend avantageusement une interface permettant à un utilisateur de sélectionner la machine de traitement d'informations avec laquelle la manette de jeu est destinée à coopérer parmi plusieurs choix.

Les quatre boutons 2, 3, 4, 5 peuvent être conçus de la même manière. Ainsi, on s'attachera désormais à décrire le bouton 2, illustré schématiquement sur la figure 2. Le bouton 2 comprend une source de lumière 6 et un filtre optique 7. Le filtre optique 7 comprend une face apparente 8, visible pour un utilisateur de la manette. Le filtre optique 7 est positionné de sorte à être traversé par des rayons lumineux R issus de la source de lumière 6. De préférence, la source de lumière 6 est positionnée sous le centre du filtre optique 7. En variante, la source de lumière 6 pourrait aussi être déportée sur un côté du filtre optique 7 pour autant que les rayons lumineux émis par la source de lumière puissent atteindre et traverser le filtre optique 7. La source de lumière 6 peut être fixée solidairement au bouton 2 ou fixée solidairement à un corps de la manette de jeu 1.

La manette de jeu 1 comprend en outre un moyen de contrôle 9 de l'allumage de la source de lumière 6. Le moyen de contrôle 9 est lié aux moyens de sélection mentionnés précédemment de sorte à contrôler l'allumage de la source de lumière 6 en fonction de la sélection d'une machine de traitement d'informations donnée.

Le filtre optique 7 est un élément passif. Il ne requiert aucune alimentation en énergie pour fonctionner. La face apparente 8 du filtre optique 7 peut être une face externe du bouton 2, destinée à entrer en contact avec les doigts de l'utilisateur de la manette de jeu. En variante, le filtre optique 7 peut être recouvert par une couche externe transparente par exemple en vernis ou en plastique transparent.

Grâce à la combinaison de la source de lumière 6 et du filtre optique 7, le bouton 2 est apte à afficher, au choix, un premier symbole ou un deuxième symbole, différent du premier symbole, sur la face apparente 8. L'apparence du bouton 2 peut ainsi être modifiée. Ceci permet de configurer la manette de jeu de sorte à ce que les symboles affichés sur chacun des boutons 2, 3, 4, 5 correspondent aux symboles préconisés par le fabricant de la machine de traitement d'informations à laquelle la manette de jeu est connectée. En référence aux symboles couramment représentés sur les boutons de manettes de jeu, chacun des deux symboles peut être choisi parmi un A, un B, un X, un Y, un carré, un triangle, un rond ou une croix. En variante, toute autre forme de symbole ou pictogramme pourrait être envisagée. Le premier symbole et le deuxième symbole peuvent être tous les deux affichés au centre de la face apparente. Ils peuvent comprendre au moins une portion commune, c'est-à-dire qu'il peut exister au moins un point de la face apparente 8 qui appartienne à la fois au premier symbole et au deuxième symbole. Chacun des deux symboles peut ainsi occuper une surface importante de la face apparente. Les deux symboles n'occupent pas deux zones distinctes de la face apparente 8.

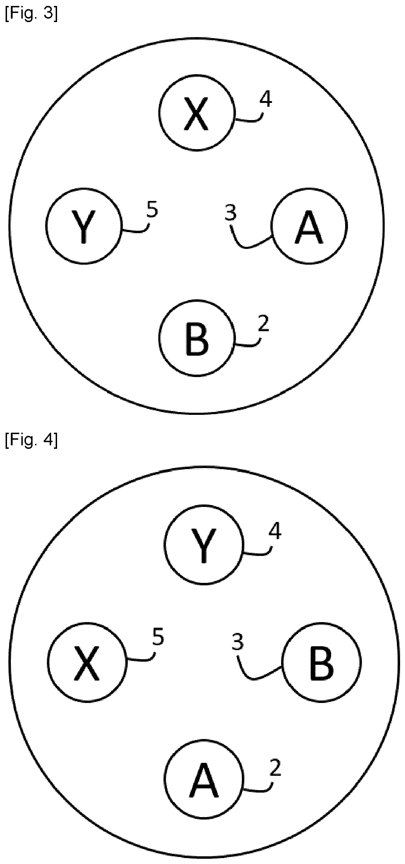

Selon l'exemple illustré sur la figure 3, les quatre boutons 2, 3, 4, 5 de la manette de jeu 1 peuvent ainsi être configurés de sorte à ce qu'un X soit représenté sur le bouton du haut, un B sur le bouton du bas, un Y soit sur le bouton de gauche, et un A sur le bouton de droite. Une telle configuration correspond à la disposition classiquement utilisée pour les manettes de jeu compatibles avec les consoles de jeu Nintendo Switch^{®}. Selon l'exemple illustré sur la figure 4, les quatre boutons 2, 3, 4, 5 de la même manette de jeu 1 peuvent être transformés de sorte à ce qu'un Y soit représenté sur le bouton du haut, un A sur le bouton du bas, un X soit sur le bouton de gauche, et un B sur le bouton de droite. Une telle configuration correspond à la disposition classiquement utilisée pour les manettes de jeu compatibles avec les consoles de jeu Microsoft Xbox^{®}. L'utilisateur bénéficie donc d'une manette de jeu dont l'apparence est adaptée à la machine de traitement d'informations qu'il utilise. Ceci est particulièrement utile lorsque le logiciel exécuté par la machine de traitement d'informations suggère d'appuyer sur un bouton comprenant un symbole donné pour effectuer une action particulière. L'utilisateur peut alors observer directement les boutons de sa manette de jeu pour déterminer sur quel bouton il doit appuyer.

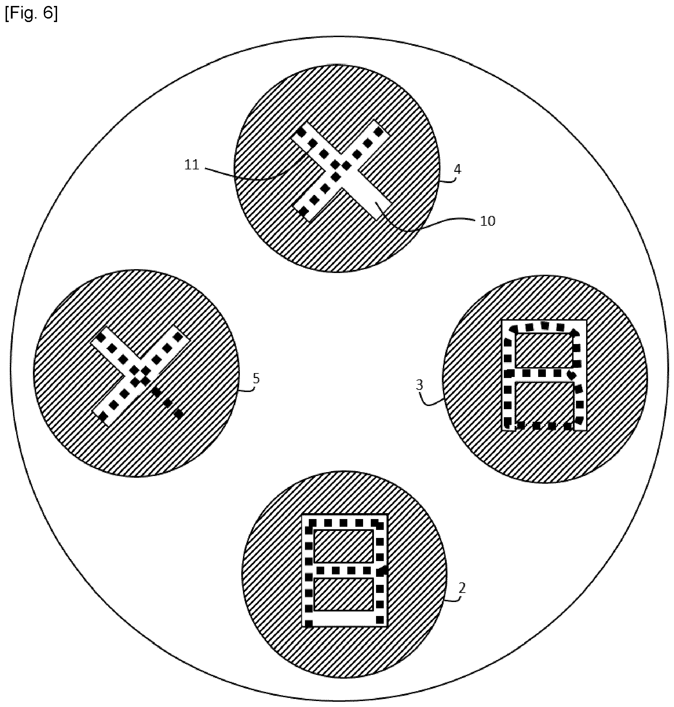

Les figures 5 et 6 illustrent plus en détail un premier mode de réalisation de l'invention. Selon ce mode de réalisation, les boutons 2, 3, 4 et 5 sont configurés de sorte à afficher un premier symbole lorsque la source de lumière est allumée, et de sorte à afficher un deuxième symbole, différent du premier symbole lorsque la source de lumière est éteinte. La figure 5 illustre la configuration des quatre boutons 2, 3, 4, 5 lorsque leur source de lumière respective est éteinte. Dans cette configuration, les symboles B, A, X et Y sont respectivement affichés sur les boutons 2, 3, 4 et 5, comme sur la figure 3. La figure 6 illustre la configuration des quatre boutons 2, 3, 4, 5 lorsque leur source de lumière respective est allumée. Dans cette configuration, les symboles A, B, Y et X sont respectivement affichés sur les boutons 2, 3, 4 et 5, comme sur la figure 4. Les A sont donc remplacés par des B et inversement. Les X sont remplacés par des Y et inversement.

Selon ce premier mode de réalisation, la face apparente 8 du filtre optique 7 comprend un dessin 10 du deuxième symbole, c'est-à-dire une représentation graphique du deuxième symbole. Le dessin 10 peut être réalisé en appliquant une ou plusieurs couches de couleurs sur le filtre optique 7. Le dessin 10 peut être, par exemple, réalisé avec une couleur claire (représentée en blanc sur les figures 5 et 6), notamment du blanc, sur un fond de couleur plus sombre (représentée en surface hachurée sur les figures 5 et 6), notamment du noir. Le dessin 10 peut être par exemple réalisé en apposant une couche de peinture uniforme sur la face apparente 8 du filtre optique 7 et en retirant localement cette couche de peinture avec un laser.

En outre, le filtre optique 7 comprend un ensemble d'ouvertures 11 transparentes agencées selon le premier symbole. Lorsque la source de lumière 6 est allumée, les rayons lumineux R issus de la source de lumière peuvent traverser le filtre optique 7 en passant par les ouvertures 11. Les rayons lumineux incidents sur le filtre optique 7 en dehors des ouvertures 11 sont réfléchis ou absorbés par le filtre optique 7.

Selon un mode de réalisation, le filtre optique 7 comprend un substrat transparent sur lequel est formé le dessin. Les ouvertures 11 sont alors des trous formés dans le dessin et découvrent le substrat transparent. Ces trous peuvent être formés au moyen d'un laser, de sorte à obtenir des ouvertures de très faibles dimensions. Selon un autre mode de réalisation, le substrat du filtre optique 7 pourrait aussi être en matériau opaque et être percé au niveau des ouvertures 11.

Le filtre optique 7 est donc configuré pour réaliser une filtration spatiale des rayons lumineux issus de la source de lumière 6 : les rayons lumineux incidents au niveau des ouvertures 11 traversent le filtre optique 7 et peuvent être visibles pour l'utilisateur de la manette de jeu. Les rayons lumineux incidents entre les ouvertures 11 sont réfléchis ou absorbés soit par le substrat du filtre optique s'il est opaque, soit par le dessin 10 lorsque le substrat est transparent. Ces rayons ne sont donc pas visibles pour l'utilisateur de la manette de jeu.

Les dimensions des ouvertures 11 sont suffisamment fines pour être invisibles ou peu visibles à l'œil nu lorsque la source de lumière 6 est éteinte. Les ouvertures 11 peuvent être, par exemple, des rectangles comprenant des côtés mesurant entre 0.1mm à 0.4mm inclus.

Avantageusement, la source de lumière 6 lorsqu'elle est éteinte ou un arrière-plan de la source de lumière 6 qui serait éventuellement visible au travers des ouvertures 11 présente une couleur proche de la couleur du dessin au niveau des ouvertures concernées, ce qui rend les ouvertures encore plus faiblement perceptibles à l'œil nu.

Lorsque la source de lumière 6 est allumée, comme cela est représenté sur la figure 6, des rayons lumineux sont diffusés par chacune des ouvertures 11 qui forment alors autant de points lumineux très bien visibles. La puissance de la source de lumière 6 est telle que les ouvertures 11 deviennent bien plus lumineuses que le dessin 10. Bien que toujours présent, le dessin 10 devient alors bien moins perceptible que les ouvertures 11. Le premier symbole est alors bien mieux visible que le deuxième symbole et l'utilisateur ne perçoit que le premier symbole.

Avantageusement, chaque deuxième symbole peut être représenté par un ensemble de segments 12 reliés entre eux uniquement par au moins une de leur extrémité. Par exemple, comme cela est visible sur la figure 5, le A comprend six segments, le B comprend sept segments, le X comprend quatre segments, et le Y comprend trois segments. On remarque sur le bouton 3 que les six segments du A comprennent des ouvertures 11. De même, on remarque sur le bouton 5 que les trois segments du Y comprennent des ouvertures 11. Inversement, toutes les ouvertures 11 du filtre optique du bouton 2 sont agencées dans des segments formant le symbole B. De même, toutes les ouvertures 11 du filtre optique du bouton 4 sont agencées dans des segments formant le symbole X. Ainsi, le premier symbole et le deuxième symbole sont superposés autant que possible. Un tel agencement permet d'améliorer la visibilité du premier symbole ou du deuxième symbole. En effet, lorsque la source de lumière 6 est éteinte, les ouvertures 11 s'intègrent harmonieusement dans le dessin 10 du deuxième symbole si bien qu'elles deviennent très peu visibles. De même, lorsque la source de lumière 6 est allumée, le dessin 10 s'intègre harmonieusement dans les ouvertures 11 devenues lumineuses, si bien qu'il devient très peu visible.

Les figures 7 et 8 illustrent un deuxième mode de réalisation de l'invention. Afin de simplifier l'exposé, on utilise pour la description du deuxième mode de réalisation les mêmes références que pour la description du premier mode de réalisation, et on s'attache uniquement à décrire les différences par rapport au premier mode de réalisation.

Selon ce deuxième mode de réalisation, la source de lumière 6 est configurée pour émettre de la lumière d'une première couleur et pour émettre de la lumière d'une deuxième couleur différente de la première couleur. La source de lumière 6 peut, par exemple, comprendre deux diodes électroluminescentes dont l'allumage est contrôlé par le moyen de contrôle 9 en adaptant une tension électrique aux bornes de la source de lumière. Alternativement, la source de lumière 6 peut aussi comprendre deux diodes électroluminescentes contrôlées individuellement par le moyen de contrôle 9. La première couleur et la deuxième couleur peuvent être choisies parmi l'ensemble des couleurs du spectre visible, notamment le violet, l'indigo, le bleu, le vert, le jaune l'orange et le rouge. La première couleur et la deuxième couleur sont suffisamment différentes l'une de l'autre pour mettre en oeuvre l'invention. Par exemple, la différence de longueur d'onde entre la première couleur et la deuxième couleur peut être d'au moins 10nm, voire au moins 50 nm, voire au moins 100 nm.

Le filtre optique 7 comprend une première zone 13 apte à laisser passer des rayons lumineux de la première couleur et de la deuxième couleur. Notamment, la première zone peut être une zone transparente. Le filtre optique 7 comprend également une deuxième zone 14 apte à bloquer les rayons lumineux de la première couleur et à laisser passer les rayons lumineux de la deuxième couleur. Par exemple, la première couleur de la source de lumière peut être une couleur jaune et la deuxième zone du filtre peut être de couleur bleue. Alternativement, la première couleur de la source de lumière peut être une couleur verte et la deuxième zone du filtre peut être de couleur magenta. Alternativement, la première couleur de la source de lumière peut être une couleur rouge et la deuxième zone du filtre peut être de couleur cyan. D'une manière générale, la deuxième zone du filtre peut être choisie dans une couleur complémentaire à la première couleur de la source de lumière 6 selon la théorie de la synthèse soustractive. La deuxième couleur de la source de lumière 6 peut être de la même couleur que la deuxième zone 14 du filtre optique 7.

Lorsque la source de lumière 6 émet des rayons lumineux de la deuxième couleur, les rayons lumineux traversent la première zone 13 et la deuxième zone 14. On obtient ainsi l'affichage d'un premier symbole formé par la réunion des deux zones 13 et 14. Lorsque la source de lumière 6 émet des rayons lumineux de la première couleur, les rayons lumineux traversent la première zone 13 mais pas la deuxième zone 14. On obtient ainsi l'affichage d'un deuxième symbole formé uniquement par la première zone 13.

Selon ce deuxième mode de réalisation, le filtre optique 7 est donc configuré pour réaliser une filtration par longueur d'onde des rayons lumineux issus de la source de lumière 6 et repose sur le principe de la synthèse soustractive de couleurs.

Selon l'exemple illustré sur la figure 7, on parvient ainsi à afficher au choix un X ou un Y, simplement en faisant varier la couleur émise par la source de lumière. On bénéficie non seulement d'un symbole différent mais également d'une couleur différente ce qui permet d'encore mieux différencier les deux configurations d'affichage. Dans ce premier exemple, l'un des symboles (en l'espèce le symbole Y) est inclus dans l'autre symbole (en l'espèce le X), ce qui permet d'envisager un filtre optique 7 assez simple ne comportant que deux zones différentes.

Selon l'exemple illustré sur la figure 8, le filtre optique 7 comprend la première zone 13 et la deuxième zone 14 telle que définie précédemment, mais également une troisième zone 15 apte à bloquer les rayons lumineux de la deuxième couleur et à laisser passer les rayons lumineux de la première couleur. Ce mode de réalisation permet d'afficher deux symboles différents lorsqu'aucun de ces deux symboles n'est inclus d'ans l'autre symbole. La première zone 13 correspond aux portions communes du premier symbole et du deuxième symbole. La deuxième zone 14 correspond aux portions du premier symbole non inclues dans le deuxième symbole. La troisième zone 15 correspond aux portions du deuxième symbole non inclues dans le premier symbole. Lorsque la source de lumière 6 émet des rayons lumineux de la première couleur, les rayons lumineux traversent la première zone 13 et la troisième zone 15 mais pas la deuxième zone 14. Selon l'exemple de la figure 8, on peut ainsi obtenir l'affichage d'un A. Lorsque la source de lumière 6 émet des rayons lumineux de la deuxième couleur, les rayons lumineux traversent la première zone 13 et la deuxième zone 14 mais pas la troisième zone 15. On peut ainsi obtenir l'affichage d'un B.

La première couleur des rayons lumineux peut être verte et la deuxième couleur des rayons lumineux peut être rouge. La deuxième zone 14 peut alors être de couleur magenta et la troisième zone 15 peut être de couleur cyan. En variante, d'autres combinaisons de couleurs selon la théorie de la synthèse soustractive pourraient être proposées.

Finalement, lorsqu'un utilisateur utilise la manette de jeu 1, on peut tout d'abord l'apparier avec une machine de traitement d'informations. Pour ce faire on sélectionne manuellement ou automatiquement la machine de traitement d'informations destinée à coopérer avec la manette de jeu. Consécutivement à cette sélection, le moyen de contrôle 9 contrôle automatiquement l'allumage de la source de lumière 6. Si la manette de jeu est équipée de boutons selon le premier mode de réalisation, le moyen de contrôle 9 contrôle simplement l'allumage ou l'extinction de chaque source de lumière. Si la manette de jeu est équipée de boutons selon le deuxième mode de réalisation, le moyen de contrôle 9 définit la couleur de la source de lumière de chaque bouton. Consécutivement à ce contrôle de la source de lumière, le premier symbole ou le deuxième symbole apparait sur la face apparente 8 de chaque bouton. On parvient ainsi à modifier l'aspect de la manette de jeu en fonction de la machine de traitement d'informations à laquelle elle est connectée. Les boutons de la manette de jeu demeurent néanmoins très simples à fabriquer.

## Revendications

1. Manette de jeu (1) comprenant au moins un bouton (2, 3, 4, 5) équipé d'une source de lumière (6) et d'un filtre optique (7) pourvu d'une face apparente (8) pour un utilisateur de la manette, le filtre optique étant destiné à filtrer des rayons lumineux issus de la source de lumière, le filtre optique étant configuré pour afficher sur sa face apparente un premier symbole et un deuxième symbole différent du premier symbole, le premier symbole étant affiché lorsque ladite source de lumière est allumée.

2. Manette de jeu (1) selon la revendication précédente, **caractérisée en ce que** le filtre optique (7) est configuré pour afficher le deuxième symbole lorsque ladite source de lumière est éteinte.

3. Manette de jeu (1) selon la revendication précédente, **caractérisée en ce que** la face apparente (8) du filtre optique (7) comprend un dessin du deuxième symbole, et **en ce que** le filtre optique comprend des ouvertures (11) transparentes agencées selon le premier symbole.

4. Manette de jeu (1) selon la revendication précédente, **caractérisée en ce que** le deuxième symbole est formé par un ensemble de segments (12), et **en ce que** :
- tous les segments du deuxième symbole comprennent des ouvertures transparentes, ou
- toutes les ouvertures transparentes du filtre optique sont agencées dans des segments du deuxième symbole.

5. Manette de jeu (1) selon la revendication 1, **caractérisée en ce que** la source de lumière est configurée pour émettre de la lumière d'une première couleur et pour émettre de la lumière d'une deuxième couleur différente de la première couleur, le filtre optique (7) comprenant une première zone (13) apte à laisser passer des rayons lumineux de la première couleur et de la deuxième couleur, notamment la première zone étant transparente, le filtre optique (7) comprenant une deuxième zone (14) apte à bloquer les rayons lumineux de la première couleur et à laisser passer les rayons lumineux de la deuxième couleur.

6. Manette de jeu (1) selon la revendication précédente, **caractérisée en ce que** :
- la première couleur est une couleur jaune et la deuxième zone du filtre est de couleur bleue, ou **en ce que**
- la première couleur est une couleur verte et la deuxième zone du filtre est de couleur magenta, ou ce que
- la première couleur est une couleur rouge et la deuxième zone du filtre est de couleur cyan.

7. Manette de jeu (1) selon l'une des revendications 5 ou 6, **caractérisée en ce que** le filtre optique (7) comprend une troisième zone (15) apte à bloquer les rayons lumineux de la deuxième couleur et à laisser passer les rayons lumineux de la première couleur.

8. Manette de jeu (1) selon l'une des revendications précédentes, **caractérisé en ce que** le premier symbole comprend au moins une portion en commun avec le deuxième symbole.

9. Manette de jeu (1) selon l'une des revendications précédentes, **caractérisé en ce que** le premier symbole est choisi parmi un A, un B, un X, un Y, un carré, un triangle, un rond ou une croix, et/ou **en ce que** le deuxième symbole est choisi parmi un A, un B, un X, un Y, un carré, un triangle, un rond ou une croix.

10. Manette de jeu (1) selon l'une des revendications précédentes, **caractérisé en ce que** l'au moins un bouton (2, 3, 4, 5) comprend un premier bouton (2, 4) et un deuxième bouton (3, 5), le premier symbole du premier bouton étant identique au deuxième symbole du deuxième bouton et/ou le deuxième symbole du premier bouton étant identique au premier symbole du deuxième bouton.

11. Manette de jeu (1) selon l'une des revendications précédentes, **caractérisée en ce qu'**elle est configurée pour transmettre des instructions de commande à au moins deux machines de traitement d'informations différentes, la manette de jeu comprenant en outre des moyens de sélection d'une machine de traitement d'informations, et des moyens de contrôle (8) automatique de l'allumage de la source de lumière (6) de l'au moins un bouton (2, 3, 4, 5) en fonction d'une machine de traitement d'informations sélectionnée.
